# EUROPEAN PATENT APPLICATION

(11) **EP 1 705 911 A1**
(43) Date of publication of application: **27.09.2006**
(21) Application number: 05290651.8
(22) Date of filing: 24.03.2005
(51) Int. Cl.: H04N 7/14

(54) **Video conference system**

(71) Applicant: ALCATEL, 75008 Paris (FR)
(72) Inventor: Jeannerod, Laurent, 67205 Oberhausbergen (FR); Penet, Xavier, 67400 Illkirch Graffenstaden (FR)
(74) Representative: Zinsinger, Norbert

(57) **Abstract**

The invention concerns a video conference system and a method for controlling a video conference with two or more participants (10 to 12, 20, 21) whereby the system comprises two or more microphones (15, 16, 25, 26) for receiving audio signals, one or more cameras (18, 19, 28, 29) for imaging the participants (10 to 12, 20, 21), a screen (17, 27) for displaying remote participants (10 to 12, 20, 21), and a control unit (3, 4) for filtering the received audio data for detection of speech from the participants (10 to 12, 20, 21), determining positional information of the participants (10 to 12, 20, 21) based on the filtered audio data, calculating settings of the one or more cameras (18, 19, 28, 29) based on said positional information, generating control signals for setting the one or more cameras (18, 19, 28, 29) according to the calculated settings, and sending the control signals to the one or more cameras (18, 19, 28, 29).

## Description

The invention relates to a video conference system and a method for controlling a video conference.

DE 199 63 102 A1 describes a visual telephone device which comprises a telephone devicesystem for sending and receiving of audio and video data, a displaying device, a picture recording device, a microphone device, and localisation means. The localisation means determine the spatial position of the microphone held by a calling person. The determined data are used to arrange the picture recording device in such a way that the calling person's head is captured. Then the picture data of the calling person are sent together with the voice data to the other calling person. Picture data received from the other calling person are displayed on the displaying device, favourably a television set. The advantage of this device with regard to prior art visual telephone devices is that the calling person is not required to remain at a fixed position.

Within a video conference between several parties, it is essential to ensure that ali participants pay maximum attention to the various speakers. The video component should be a support to the speech component, not a disturbance. Therefore it is important to have the right focus on the corresponding speakers at the right time depending on the evolution of the video conference.

One can think of a solution for video conference systems where the camera is directly moved from one speaker to another one when a current speaker stops and a next speaker begins to speak. This approach may be felt as rather clumsy camera work and does not account for several simultaneous speakers. Moreover, it is not always easy to clearly identify a single speaker in a video conference as there may be several ones. Then it may happen that the camera is "lost" when it is not possible to isolate a single speaker in a noisy discussion.

In another solution, the camera may change the zoom from a single speaker backwards to the whole conference group and forwards again to the next single speaker when speakers change. If the camera zooms fore and back too quickly, this may disturb the participants rather than help them to follow the discussion.

It is the object of the present invention to provide an improved video conference system and a method of controlling a video conference.

The object of the present invention is achieved by a video conference system for controlling a video conference with two or more participants, whereby the video conference system comprises two or more spatially distributed microphones for receiving audio signals, at least one camera for imaging the participants, a screen for displaying remote participants, and a control unit for filtering the received audio data for detection of speech from the participants, determining positional information of one or more speaking participants based on the filtered audio data, calculating settings of the at least one camera based on said positional information, generating control signals for setting the at least one camera according to the calculated settings, and sending the control signals to the at least one camera. The object of the present invention is further achieved by a method of controlling a video conference with two or more participants, the method comprising the steps of receiving audio data; filtering the audio data and detecting speech from the participants; determining positional information of one or more speaking participants based on the filtered audio data; calculating settings of at least one camera for imaging one or more of the participants based on said positional information; generating control signals for setting the at least one camera according to the calculated settings; and sending the control signals to the at least one camera.

The invention advantageously may enable the participants of a video conference to move during the conference and still to be located by the video conference system. Therefore the participants are not forced, e.g., to remain seated behind a fixed microphone on the table but they may freely walk around in the conference room.

The invention tightly couples audio filtering and detection capabilities with actions of the video devices, i.e., camera and/or screen, and therefore improves the attention of the participants of a video conference independent of the type of discussion. The screen displays smooth changes and zooms and therefore provides assistance to the comprehensability of one or more speakers and avoids any unwanted disturbance or distraction of the viewers.

The invention provides an interactive and interdependent video conference system by taking into account the current situations at all the different video conference sites for the control of the cameras and screens located at the different video conference sites. The video conference system according to the invention is capable to provide a highly efficient and diversified camera adjustment and screen layout. It further provides reliable ways of localising a speaker.

Further advantages are achieved by the embodiments of the invention indicated by the dependent claims.

According to a preferred embodiment of the invention, the settings of a camera are calculated by the control unit so that the camera points to a speaking participant. The calculation of the settings of a camera is based on the audio data which provide positional information of the speakers in a video conference. Therefore, as the control unit has information on where a speaker is located, the control unit is enabled to calculate camera settings and generate corresponding control signals which cause an actuator of a camera to direct the camera to the speaker.

It is also possible that not only one camera but several cameras point to a speaker, caused by control signals from the control unit. Then the speaker can be imaged from different views.

According to a preferred embodiment of the invention, the camera is able to change its position, its pointing direction, and its zoom. For example, in case the video conference comprises a greater number of participants sitting at a long table, its may be useful when the camera can be moved to different positions, e.g., from one end of the table to the other. it is particularly useful when the camera can be moved to different angles. The capabilities of the camera to change its position and its pointing can be combined with the zoom of the camera, e.g., to change from a complete image of the whole video conference group to a single speaker.

It is further possible that the video data generated by a camera by imaging the participants are transferred to the control unit for processing in a video processor. The video processor executes tasks comparable to the tasks of a director of photography. It determines the presentation and the layout of the camera images on a screen. For this task, the video processor uses as input the video data and the audio data. Based on the audio data, the video processor may decide, e.g., to image one speaker on the screen, or to divide the screen to image two or more speakers at a time.

In case, several cameras simultaneously image the video conference, it is possible that two or more main speakers in a conversation are imaged, each speaker by a separate camera. Then the layout of the display may be controlled such that one speaker is shown on the left side of the screen, while another speaker is shown on the right side. One can even think of more than two participants simultaneously displayed in separate areas of the screen in a kind of patchwork. It is also possible that the video processor chooses a cut-out of an image provided by one of the cameras. It is also possible that the change of display of a current speaker to a following speaker is executed with a blurring of the picture to smooth the transition in a kind of dissolve technique. The video processor processes the raw video data delivered by the cameras and sends the processed video data to a screen for display.

It is further possible that information about the location of the current speaker is gathered with the help of two spatially distributed microphones, either by measuring the intensity levels at each microphone or by measuring the runtime differences of the speech received from the participants at each microphone. The spatial resolution will be enhanced when more than two microphones are used. In any case, the microphones should be spatially distributed in order to achieve a sufficient resolution.

In case of the measurement of the intensity level, each microphone measures the amplitude of an audio signal received from a speaking persons. The resulting amplitude distribution from all available microphones allows to determine where a specific audio signal originates, i.e. the location of the speaking person. Theoretically, two microphones should be sufficient to determine the azimuth of an audio source. It enhances the spatial resolution if more than two microphones are used.

In the case of measurement of runtime, the time when a specific audio signal arrives is measured at each microphone. For a microphone in front of a speaking person, this would be earlier than for a microphone some metres apart from the speaking person. As acoustic signals travel with about 330 m/s, a distance of 2 metres between two microphones results in a runtime difference of 6 ms. In order to catch such small runtime differences of speech signals, it is essential to record and define the characteristics of a measured audio signal, e.g., a characteristic peak of the audio signal. This then allows a correlation between this peak and the time the peak arrives at each of the microphones. Again, theoretically two microphones should be sufficient. It enhances the spatial resolution if more than two microphones are used. The advantage of the positioning based on runtime difference is that the video conference participants are allowed to move during the conference and still can be located by the system.

It may be advantageous to use a combination of the measurement of intensity levels and runtime in order to achieve a high accuracy. This may be particularly important in the case of many participants sitting close one to another.

It is possible that the room where a video conference with N participants takes place is divided into N sectors, each participant being in a separate sector. Each sector comprises a microphone covering the sector. This might be a preferred embodiment of the invention if microphones are easily available and/or the costs for a great number of microphones is relatively low. A current speaker can be located by measuring the intensity levels at all N microphones. The sector where the microphone with the highest intensity level is located is the sector with the current speaker, and the camera can be moved to image that sector. Thus it is sufficient to define the sectors with static microphones which can be done before the video conference begins. Not only the microphone with the highest level may be determined but all microphones with intensity levels above a threshold. Then all the corresponding speakers are classified as main speakers and the cameras are moved to the corresponding sectors.

Some advantages are achieved if the time duration of speech from a participant is measured. The settings of the camera and the screen may be different in case a speaker speaks for a long time, e.g., a minute, and in case a speaker only makes a short remark or briefly answers a question. In the first case, the camera, e.g., could focus and zoom on the speaker while in the second case, where it is important not to disturb the viewers' attention with a jerky and fast camera movement, the speaker could, e.g., not be imaged at all or the image could be zoomed backward to capture the whole conference group.

The time duration of speech may be compared with a threshold which is pre-defined or dynamically determined based on the currently on-going videoconference. For example, if the duration exceeds a first, second, or third threshold, the settings may be changed from an initial setting to a second, third, or fourth setting in order to provide the viewers with diversified displays of the speaker and the other participants. Particularly, the camera may zoom forward to a speaker if the duration of his speech exceeds a specific threshold.

The measurement of the speech duration can also help to register some speech characteristics of the participants. While one participant takes his time to express his opinions and speaks for a relatively long time, another participant may be characterised by brief and concise contributions. Then the video conference system may be adapted to register such temporal differences, gather them in a data base and "learn" from it for future contributions of these speakers with regard to suitable settings of camera and screen.

It is also possible that the video conference system is adapted to measure the intensity levels of speech signals which are simultaneously received from the two or more participants. The measured values are then compared with a threshold for determining one or more main speakers. When a speaker's speech intensity level exceeds an absolute threshold or exceeds a threshold defined relative to the speech intensity levels of the other participants, he may be classified as a main speaker. Then the settings of the camera and the screen may be adjusted correspondingly. According to a preferred embodiment of the invention, one or more main speaker exceeding a specific threshold will be always displayed on the screen.

These as well as further features and advantages of the invention will be better appreciated by reading the following detailed description of presently preferred exemplary embodiments taken in conjunction with accompanying drawings of which:
- Fig. 1: is a block diagram of a system for controlling a video conference according to a first embodiment of the invention.
- Fig. 2: is a block diagram of a system for controlling a video conference according to another embodiment of the invention.
- Fig. 3: is a block diagram showing a detail of a system for controlling a video conference according to a further embodiment of the invention.

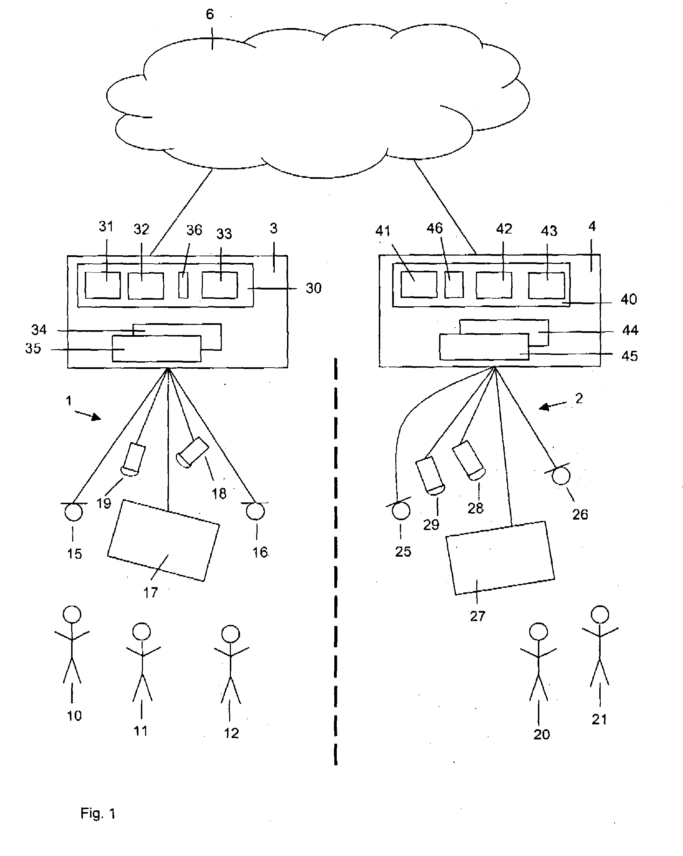

Fig. 1 shows a video conference site 1 where participants 10, 11, 12 have gathered to communicate via a telecommunication network 6 with remote participants 20, 21 at another video conference site 2. At the video conference site 1, there is a first video control system comprising microphones 15, 16, a screen 17, cameras 18, 19, each of which is connected, either via wireless or wire-line connections, to a control unit 3, which is also part of the video control system. The microphones are adapted to receive audio signals at the video conference site 1 and to send them to the control unit 3, the screen 17 is adapted to display the video data received from the remote video conference site 2, and the cameras 18, 19 are controlled by the control unit 3 to image the participants 10, 11, 12.

Correspondingly, at the video conference site 2, there is a second video control system comprising microphones 25, 26, a screen 27, cameras 28, 29, connected to a control unit 4 which is also part of the second video control system. The microphones are adapted to receive audio signals at the video conference site 2 and send them to the control unit 4, the screen 27 is adapted to display the video data received from the first video conference site 1, and the cameras 28, 29 are controlled by the control unit 4 to image the participants 20, 21.

The control unit 3 is constituted of a software platform and application programs executed on the system platform comprising a hardware platform and the aforementioned software platform. The functionalities of the control unit 3 are performed by the execution of these software components by the hardware components of the control unit 3. From functional point of view, the control unit 3 comprises a transmitter module 35, a receiver module 34, and a processing unit 30 with a filter module 31, a localisation module 32, a calculation module 33, and a video processor 36.

The configuration of control unit 4 is equivalent to the one of control unit 3. From functional point of view, the control unit 4 comprises a transmitter module 45, a receiver module 44, and a processing unit 40 with a filter module 41, a localisation module 42, a calculation module 43, and a video processor 46.

The control units 3, 4 are adapted to exchange control data with each other via a telecommunication network 6, e.g., a PSTN or an IP network (PSTN = Public Switched Telecommunication Network; IP = Internet Protocol). The receiving and sending of control signals via the telecommunication network 6 is executed by means of the receiver modules 34, 44 and the transmitter modules 35, 45.

Let us assume a state of the video conference where one or more of the participants 10, 11, 12 at the present video conference site 1 are currently active, i.e., speaking, while the participants 20, 21 at the remote video conference site 2 are currently passive, i.e., listening. More particularly, let us assume that currently only participant 10 speaks. The acoustic signals at site 1 are received by each of two microphones 15, 16, converted by the microphones 15, 16 into audio signals and transmitted to the control unit 3. There the audio signals are routed to the processing unit 30 and subjected to a filtering procedure in the filter module 31. The filtering procedure is adapted to filter human voices from any spurious acoustic signals like traffic noise, machine noise, background sounds. A voice/non-voice filtering makes sure that the cameras 15, 16 are not moved or the display on the screen is changed upon a spurious noise signal. The voice filtering may be based on the fact that the main contributions of the different sound types like, e.g., human voices, traffic noise, background noise (coughing, turning pages, etc.) are found in different frequency ranges or with different characteristic sound patterns.

The intensity of the speech signals received at the microphone 15 is compared with the intensity of the speech signals received at the microphone 16. From this comparison, the location of the speaking participant 10 can be deduced. The accuracy of the location is improved when the positions of the microphones 15, 16 are known to the control unit 3.

Alternatively, the location of the speaking participant 10 is determined by a measurement of the runtime difference of a speech signal, i.e., the difference of the arrival time of a speech signal from the participant 10 at the microphone 15 and the arrival time of a speech signal from the participant 10 at the microphone 16. The runtime difference of a speech signal with regard to the two microphones 15, 16 can be translated to a distance difference of the participants 10 to the microphones 15, 16. Thus, a direction of the speaking participant 10 relative to a line connecting the microphones 15, 16 can be deduced.

In a preferred embodiment, the number of microphones is not restricted to two. Instead three or more microphones are spatially distributed on the site 1. Thus, a higher resolution can be achieved. It is also advantageous if both localisation methods described above, the measurement of the intensity levels and the measurement of the runtime difference, are combined.

It is also possible that the localisation of speaking participant is based on voice characteristics of the participants. Then the localisation process must be adjusted prior to the begin of the video conference, i.e., every participant 10, 11, 12 has to provide a speech sample to the control unit 3 which "learns" to correlate specific voice characteristics with a position of the video conference site; each of the corresponding participants 10, 11, 12, must then be seated at a specific place of site 1.

The control unit 3 uses the location data and the speech data of the participants 10, 11, 12 to calculate in a calculator module 33 suitable settings for the cameras 18, 19. It generates corresponding commands, i.e., control signals adapted to be utilised by a control device and/or an actuator of the cameras 18, 19 to implement the calculated settings, i.e., to zoom forward and backward, to move the camera to a specific position, and to direct the pointing of the camera in a specific direction.

Similarly, the calculator module 33 calculates suitable settings for the video processor 36 such that the video processor is instructed to process the raw video data generated by the cameras 18, 19 in a suitable way, e.g., to present at the same time video data from the two cameras 18, 19 on the remote screen, or to cut out a small picture of a larger picture imaged, e.g., by the camera 18, e.g., to cut out only participant 10 from a picture showing all three participants 10, 11, 12. In analogy to the audio data, also for the calculation of the video settings the location data and the speech data of the participants is used as a basis. The video processor 36 processes the raw video data according to the settings received from the calculator module 33 and outputs processed video data.

Upon filtering the audio signals, the control unit 3 sends the speech signals and the processed video signals via the control unit 4 at the remote video conference site 2 to the screen 27 and a loudspeaker, preferably integrated into the screen 27. From there, the audio and video data are emitted to the participants 20, 21 at the site 2. The control unit 3 also sends the control commands calculated for the cameras 18, 19 to the cameras 18, 19. These control commands are received by the cameras 18, 19 and used by control modules and actuators to adjust the settings of the cameras 18, 19 according to the calculated guidelines.

It is possible that the control unit 3 also comprises other means to modify the audio signals before transmitting them to the remote site 2, e.g., additional filters or speech distortion means, etc.

The main objective of the calculated settings is to perform smooth transitions of both camera motion and screen display changes.

For example, the time duration of the speech signals from participant 10 is measured. If the time duration of a speech is below a first pre-defined threshold, the camera 18 images the whole group of participants; then when the time duration has exceeded the first threshold, e.g., five seconds, the camera 18 begins to zoom forward to the speaking participant 10, and finally, when the time duration reaches a second threshold, the camera 18 stops zooming and images the speaker 10 in a close-up view.

When the speaker 10 stops speaking, the camera will reverse the zoom. When a new speaker 11 has been detected, it may be advantageous to instruct the camera to perform first a backward zoom of the previous speaker 10, then change the pointing and the focus to the new speaker 11. When several cameras 18, 19 are used, like in the example of Fig. 1, its is also possible to achieve a smooth transition by blurring the image before making the transition from one speaker 10 to another speaker 11.

When another participant 11 answers a question of the first participant 10, it is possible that the second camera 19 is used to image the participant 11 while the camera 18 still images the first participant 10. In case a dialogue develops between the participant 10 and the participant 11, the video processor 36 may modify the video data such that the screen 27 displays the participant 10 on one side of the screen 27 and the other participant 11 on the other side of the screen 27.

In the case a noisy discussion develops, the camera 18 is instructed to perform a backward zoom to display the full video conference site 1. Alternatively, it is also possible to display a patchwork with images of all participants 10, 11, 12.

On the other side, if the microphones 15, 16 do not detect any speech for more than a predefined number of seconds, e.g., three seconds, the voice filtering of the control unit 3 will be lowered to allow also other sounds. For example, the participants 10, 11, 12 at site 1 wish to demonstrate a sound-producing device to the participants 20, 21 at site 2. Then the participants 10, 11, 12 do not speak, the filter module 31 changes its adjusting, and the video conference system is enabled to transmit also non-voice sounds, e.g., a melody played by a toy.

In case the camera 18 images the whole discussion, it may happen that an angry participant 12 suddenly begins to shout. Then the video processor 36 is able to react to this event and to choose a cut-out of the image delivered from the back-zoomed camera 18, e.g., to present only the angry participant 12. Generally, it will take relatively long for the camera 18 to point to the shouter 12 and to zoom forward to him. The video processor may be able to react faster.

The instruction how to react in these cases have to be pre-defined and stored in the software governing the video conference system.

The description so far has concentrated on the case that the participants 10, 11, 12 at site 1 speak, and that their speech and video images are transmitted to the participants 20, 21 at site 2. It has to be noted, however, that the video conference system at site 2 is equipped in an analogous way as the video conference system at site 1. Therefore, the description given above would analogously also apply to the case when one or more of the participants 20, 21 at site 2 speak, and when their speech and video images are transmitted to the participants 10, 11, 12 at site 1.

Fig. 1 shows a video conference system where each video conference site 1, 2 comprises a separate control unit 3, 4. It is also possible that a central control unit is adapted to handle all the connected video conference sites 1, 2.

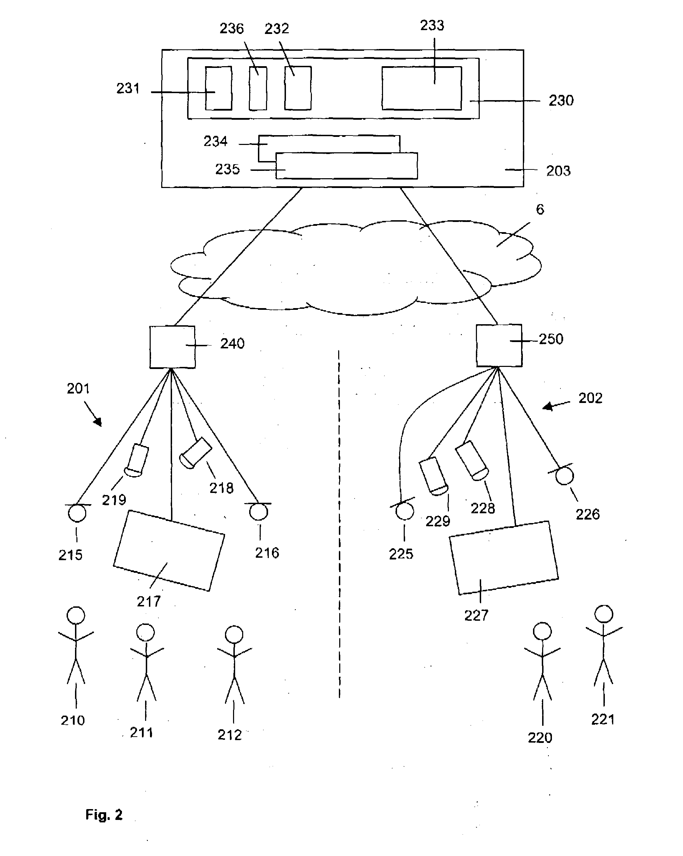

Fig. 2 shows a single central control unit 203 which simultaneously controls the video conference systems at the sites 1, 2. Preferably, the central control unit 203 is located at a central remote site, e.g., at a server site of a network provider. Then, the central control unit 203 may be constituted of one or several interlinked computers, a software platform and various application programs executed on the system platform provided by the aforementioned hardware and software platform. The functionalities of the central control unit 203 are performed by the execution of these software components by the hardware components of the central control unit 203. From functional point of view, the central control unit 203 comprises a transmitter module 235, a receiver module 234, and a processing unit 230 with a filter module 231, a localisation module 232, a calculation module 233, and a video processor 236. But it is also possible that the central control unit 203 is physically located at one of the sites 1,2.

The processing of the audio and video data is generally analogous to the description according to Fig. 1. The audio and video data collected at the video conference sites 201, 202 are gathered at the distributors 240, 250 and sent from there via the telecommunication network 6 to the central control unit 203. Inversely, the settings of the video processor 236 and the control commands for the cameras 218, 219 at site 201 and the cameras 228, 229 at site 202 are calculated centrally in the control unit 203. The audio and video data and the control commands for the cameras 218, 219, 228, 229 are sent from the control unit 203 via the telecommunication network 6 to the distributors 240, 250 from where the data and commands are forwarded to the corresponding devices.

With the control unit 203 located at a central location and overseeing the different video conference sites, the control unit 203 is able to control the video means, i.e., the cameras and screens, in an interactive and co-operative way integrating all the cameras and screens at the various sites. Then, cases when participants at one site and participants at another site talk simultaneously can be covered in an interdependent and convenient manner.

For example, when the video conference system detects a single speaker, e.g., the head of a company giving a speech of several minutes, at a first site while all the other participants at the first site and other sites remain silent, the speaker may be shown on the screens of the other sites while the listening audience at the different other sites is alternatingly shown on the screen at the first site. It might be a distraction for the speaker if specific listening persons would be shown.

Moreover, in case a dialogue develops between the participant 210 at the first site 201 and the participant 220 at the other site 202, the control unit 203 may control the cameras 218, 219 and the screen 217 at the first site 201 and the cameras 228, 229 and the screen 227 at the second site 202 such that the participant 210 is displayed on one half of the screens 217, 227 and the other participant 220 on the opposite half of the screens 217, 227.

One could also think of three or more videoconference sites, where a dialogue develops between participants at two of the three or more videoconference sites. Then the speaking participants could be displayed on the screens of the silent sites, while on the screens of the two active sites alternatively the opposite speaker and the participants at the listening sites are shown.

It should be noted, however, that the interactive and integrating way of controlling the video conference system at different sites, explained with the example given above, is also realisable with two or more control units, each located at a different video conference site. In this case, the logic governing in an interrelated way the video conference systems at all sites is not centred at one site but distributed in a multi-site approach.

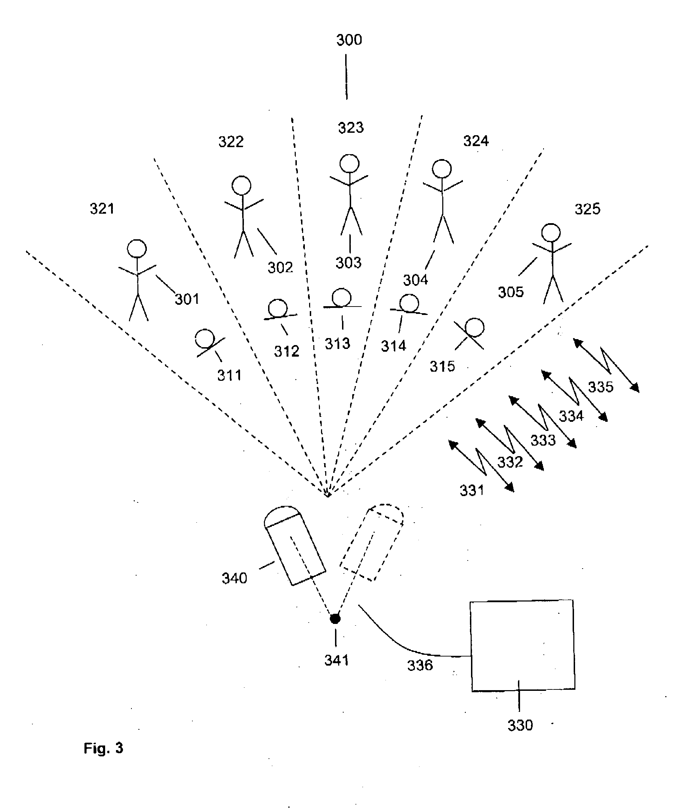

Fig. 3 shows a video conference site 300 with participants 301 to 305, located in sectors 321 to 325 of the video conference site 300. Each of the participants 301 to 305 has a microphone 311 to 315 situated in front of him. The video conference site 300 is viewed by a camera 340 rotatable about a pivotal point 341 in a way that the camera 340 can point to each of the sectors 321 to 325. The microphones 311 to 315 and the camera 340 are connected to a control unit 330, via wireless or wire-line connections 331 to 336.

Each of the microphones 311 to 315 covers the sector it is situated in. Speech detection and voice level analysis of each microphone 311 to 315 allows to detect the main speaker and to localise him by a sector number. The tracking of the camera 340 is then possible with the sector information.

For example, participant 304 located in sector 324 speaks. His speech signals are received by the microphones 311 to 315 which transmit the signals via the connections 331 to 335 to the control unit 330. The signals are filtered for human voice and anaiysed to detect the signal with the highest intensity level. As the microphone 314 is directly in front of the participant 304, the microphone 314 will receive the highest intensity level and the control unit will determine that the speaker is located in sector 324, covered by the microphone 314. The control unit 330 then generates control commands and transmits the commands via the connection 336 to the camera 340. The control commands trigger an actuator of the camera 340 to rotate the camera 340 around the pivotal point 341 to the sector 324.

## Claims

1. A video conference system for controlling a video conference with two or more participants (10 to 12, 20, 21, 210 to 212, 220, 221, 301 to 305),
**characterised in**
**that** the video conference system comprises two or more spatially distributed microphones (15, 16, 25, 26, 215, 216, 225, 226, 311 to 315) for receiving audio signals, at least one camera (18, 19, 28, 29, 218, 219, 228, 229, 340) for imaging the participants (10 to 12, 20, 21, 210 to 212, 220, 221, 301 to 305), a screen (17, 27, 217, 227) for displaying remote participants (10 to 12, 20, 21, 210 to 212, 220, 221, 301 to 305), and a control unit (3, 4, 203, 330) for filtering the received audio data for detection of speech from the participants (10 to 12, 20, 21, 210 to 212, 220, 221, 301 to 305), determining positional information of one or more speaking participants (10 to 12, 20, 21, 210 to 212, 220, 221, 301 to 305) based on the filtered audio data, calculating settings of the at least one camera (18, 19, 28, 29, 218, 219, 228, 229, 340) based on said positional information, generating control signals for setting the at least one camera (18, 19, 28, 29, 218, 219, 228, 229, 340) according to the calculated settings, and sending the control signals to the at least one camera (18, 19, 28, 29, 218, 219, 228, 229, 340).

2. The video conference system of claim 1,
**characterised in**
**that** the control unit (3, 4, 203, 330) is adapted to calculate settings of one or more cameras of the at least one camera (18, 19, 28, 29, 218, 219, 228, 229, 340) so that a camera points to a speaking participant (10 to 12, 20, 21, 210 to 212, 220, 221, 301 to 305).

3. The video conference system of claim 1,
**characterised in**
**that** the settings of the at least one camera (18, 19, 28, 29, 218, 219, 228, 229, 340) comprise its position and/or pointing direction and/or zoom.

4. A method of controlling a video conference with two or more participants (10 to 12, 20, 21, 210 to 212, 220, 221, 301 to 305),
**characterised in**
**that** the method comprises the steps of:
receiving audio data;
filtering the audio data and detecting speech from the participants (10 to 12, 20, 21, 210 to 212, 220, 221, 301 to 305);
determining positional information of one or more speaking participants (10 to 12, 20, 21, 210 to 212, 220, 221, 301 to 305) based on the filtered audio data;
calculating settings of at least one camera (18, 19, 28, 29, 218, 219, 228, 229, 340) for imaging one or more of the participants (10 to 12, 20, 21, 210 to 212, 220, 221, 301 to 305) based on said positional information;
generating control signals for setting the at least one camera (18, 19, 28, 29, 218, 219, 228, 229, 340) according to the calculated settings; sending the control signals to the at least one camera (18, 19, 28, 29, 218, 219, 228, 229, 340).

5. The method of claim 4,
**characterised in**
**that** the method comprises the steps of:
receiving at a video processor (36, 46, 236) video data from the at least one camera (18, 19, 28, 29, 218, 219, 228, 229, 340);
calculating settings of the video processor (36, 46, 236) based on said filtered audio data and/or said positional information;
sending the calculated settings to the video processor (36, 46, 236) for processing said video data; and
sending the processed video data from the video processor (36, 46, 236) to a remote screen (17, 27, 217, 227) for displaying the video data to remote participants (10 to 12, 20, 21, 210 to 212, 220, 221, 301 to 305).

6. The method of claim 5,
**characterised in**
**that** the settings of the video processor (36, 46, 236) control the layout of a video image displayed at the remote screen (17, 27, 217, 227).

7. The method of claim 4,
**characterised in**
**that** the method comprises the further step of:
measuring the intensity levels and/or the runtime differences of the speech received from the participants (10 to 12, 20, 21, 210 to 212, 220, 221, 301 to 305) at two or more spatially distributed microphones (15, 16, 25, 26, 215, 216, 225, 226, 311 to 315) for determining positional information.

8. The method of claim 4,
**characterised in**
**that** the method comprises the further steps of:
measuring the speech intensity level of the speech from one or more of N participants (10 to 12, 20, 21, 210 to 212, 220, 221, 301 to 305) received at N microphones (15, 16, 25, 26, 215, 216, 225, 226, 311 to 315), each of the N microphones (15, 16, 25, 26, 215, 216, 225, 226, 311 to 315) covering one of N sectors (321 to 325) where one of the N participants (10 to 12, 20, 21, 210 to 212, 220, 221, 301 to 305) is located;
determining the one or more sectors (321 to 325) where the one or more microphones (15, 16, 25, 26, 215, 216, 225, 226, 311 to 315) with the highest speech intensity levels are located;
calculating settings of the at least one camera (18, 19, 28, 29, 218, 219, 228, 229, 340) for imaging the one or more determined sectors (321 to 325).

9. The method of claim 4,
**characterised in**
**that** the method comprises the further steps of:
measuring the time duration of speech from a participant (10 to 12, 20, 21, 210 to 212, 220, 221, 301 to 305);
comparing the measured time duration with a threshold;
generating control signals for the at least one camera (18, 19, 28, 29, 218, 219, 228, 229, 340) to zoom forward to a participant (10 to 12, 20, 21, 210 to 212, 220, 221, 301 to 305) if the speech from the participant (10 to 12, 20, 21, 210 to 212, 220, 221, 301 to 305) lasts longer than the threshold.

10. The method of claim 4,
**characterised in**
**that** the method comprises the further steps of:
detecting speech simultaneously from two or more participants (10 to 12, 20, 21, 210 to 212, 220, 221, 301 to 305);
measuring the intensity levels of the speech simultaneously received from the two or more participants (10 to 12, 20, 21, 210 to 212, 220, 221, 301 to 305);
comparing the measured intensity levels with a threshold for determining one or more main speakers (10 to 12, 20, 21, 210 to 212, 220, 221, 301 to 305);
generating control signals for the at least one camera (18, 19, 28, 29, 218, 219, 228, 229, 340) to point to the one or more main speakers (10 to 12, 20, 21, 210 to 212, 220, 221, 301 to 305).
